# EUROPÄISCHE PATENTSCHRIFT

(11) **EP 1 710 451 B1**
(45) Veröffentlichungstag und Bekanntmachung des Hinweises auf die Patenterteilung: **05.11.2008**
(21) Anmeldenummer: 06006681.8
(22) Anmeldetag: 30.03.2006
(51) Int. Cl.: F16B 7/04, F16B 7/18

(54) **Befestigungsanordnung zur Verbindung von sich kreuzenden Rohren und Rohrrahmen mit derart verbundenen Rohren**
Fixing arrangement for connecting tubes in a cross-shaped arrangement and tubular frames with tubes connected in such a way
Dispositif de fixation pour raccorder des tuyaux se croisant, et cadres tubulaires raccordés de façon similaire

(30) Priorität: 04.04.2005 DE 102005015415
(43) Veröffentlichungstag der Anmeldung: 11.10.2006
(73) Patentinhaber: Bilsing Automation GmbH, 57439 Attendorn (DE)
(72) Erfinder: Bilsing, Alfred, 57439 Attendorn (DE)
(74) Vertreter: Jochem, Bernd

(56) Entgegenhaltungen:
- DE-C- 819 147
- DE-U- 7 504 201
- US-B1- 6 227 752

## Beschreibung

Die Erfindung betrifft eine Befestigungsanordnung zur Verbindung von sich kreuzend aneinander vorbeigeführten, runden oder achteckigen Rohren durch wenigstens eine Schraube, insbesondere bei mit Vakuumgreifern bestückten Tragrahmen zum Transport und Halten von Blechteilen in der Automobilindustrie, wobei zwischen den beiden Rohren ein deren äußeren Umfangsflächen angepaßtes Zwischenstück eingespannt ist. Eine derartige Befestigungsanordnung ist aus der DE 75 04 201 U bekannt. Die Erfindung betrifft weiterhin Rohrrahmen mit solchen Befestigungsanordnungen.

Es ist festzustellen, daß in diesem Bereich die Tragrahmen für die Vakuumgreifer immer komplexer und schwerer werden, z. B. mit über zwanzig Spannstellen mehr als 400 kg wiegen. Ein verhältnismäßig hoher Anteil des Gewichts entfällt dabei auf die üblichen, die Rohre außen umfassenden Klemmstücke. Der Erfindung liegt die Aufgabe zugrunde, diese verhältnismäßig schweren Klemmstücke durch leichtere Befestigungsanordnungen zu ersetzen, mit denen ebenso stabile Tragrahmen erzeugt werden können.

Vorstehende Aufgabe wird bei einer Befestigungsanordnung der eingangs genannten Art erfindungsgemäß dadurch gelöst, daß an der Kreuzungsstelle in jedem der beiden Rohre je ein zu ihrem jeweiligen inneren Querschnitt passender, ihn teilweise ausfüllender Einsatz angeordnet ist, deren einer eine Unterlage für den Kopf der sich durch fluchtende Querbohrungen in den Rohren erstreckenden Schraube und deren anderer eine Abstützung für den Schraubenschaft bildet.

Die Erfindung bietet den Vorteil, daß die zur Verbindung der Rohre benötigten Teile kleiner und leichter sein können als die bisher verwendeten Klemmstücke. Dennoch lassen sich sehr steife Rohrverbindungen herstellen, weil die beim Anziehen der Schrauben erzeugten Kräfte auf die übrigen Teile der Befestigungsanordnung und die Rohre als Druckkräfte wirken und diese Teile damit hochbelastbar sind.

In bevorzugter Ausgestaltung der Erfindung wird die neue Befestigungsanordnung zur Herstellung von Rohrrahmen benutzt, die aus mindestens zwei durchgehenden Rohren und mindestens zwei an diesen kreuzend vorbeigeführten Rohren bestehen. Diese Rohrrahmen können auch noch durch mit einem Ende T-förmig an ein Rohr angrenzende weitere Rohre ergänzt werden, wobei auch die T-förmige Befestigungsanordnung nach Anspruch 12 eine Schraube aufweist, die auf im Inneren der Rohre montierte Klemmteile Druckkräfte ausübt.

Anschließend werden einige Ausführungsbeispiele der Erfindung anhand der Zeichnung näher erläutert. Es zeigen:
- Fig. 1: eine perspektivische Ansicht eines aus miteinander verbundenen, runden Rohren bestehenden Tragrahmens, an dem Vakuumgreifer zum Erfassen und Transportieren von Blechteilen anzubringen sind;
- Fig. 2: eine perspektivische Ansicht in größerem Maßstab einer Kreuzungsstelle zweier Rohre des Rahmens nach Fig. 1;
- Fig. 3: einen Querschnitt durch das obere der beiden in Fig. 2 gezeigten Rohre an der Kreuzungsstelle;
- Fig. 4: eine Explosionsdarstellung der an einer Kreuzungsstelle nach Fig. 2 und 3 miteinander verbundenen Teile;
- Fig. 5: einen Querschnitt durch diejenige Rohrverbindung des Tragrahmens nach Fig. 1, an welcher ein Rohr mit seinem Ende T-förmig gegen ein durchgehendes Rohr angrenzt;
- Fig. 6: eine perspektivische Ansicht einer Rohrverbindung ähnlich Fig. 5, jedoch mit an Rundrohre angrenzenden Rechteckrohren;
- Fig. 7: eine perspektivische Ansicht entsprechend Figur 2 einer Kreuzungsstelle zweier achteckiger Rohre eines aus derartigen Rohren hergestellten Rahmens entsprechend Fig. 1;
- Fig. 8: einen Querschnitt entsprechend Fig. 3 durch die Kreuzungsstelle der Rohre nach Fig. 7;
- Fig. 9: eine Draufsicht auf die Kreuzungsstelle der Rohre nach Fig. 7 und 8;
- Fig. 10: eine Explosionsdarstellung entsprechend Fig. 4 der an der Kreuzungsstelle nach Fig. 7 und 8 miteinander verbundenen Teile und
- Fig. 11: einen Querschnitt entsprechend Fig. 5 einer Rohrverbindung mit achteckigen Rohren.

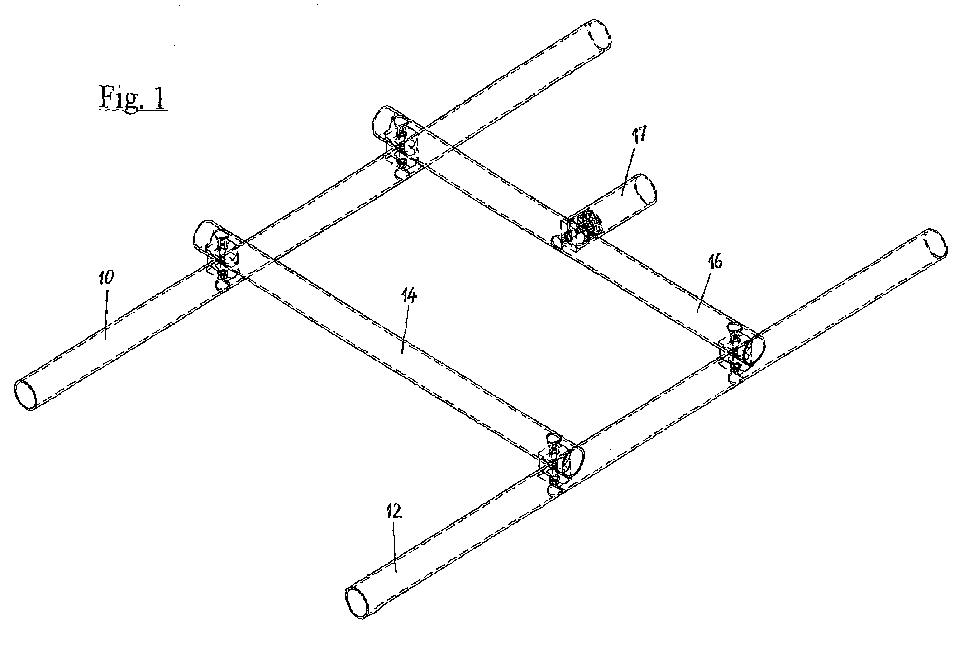

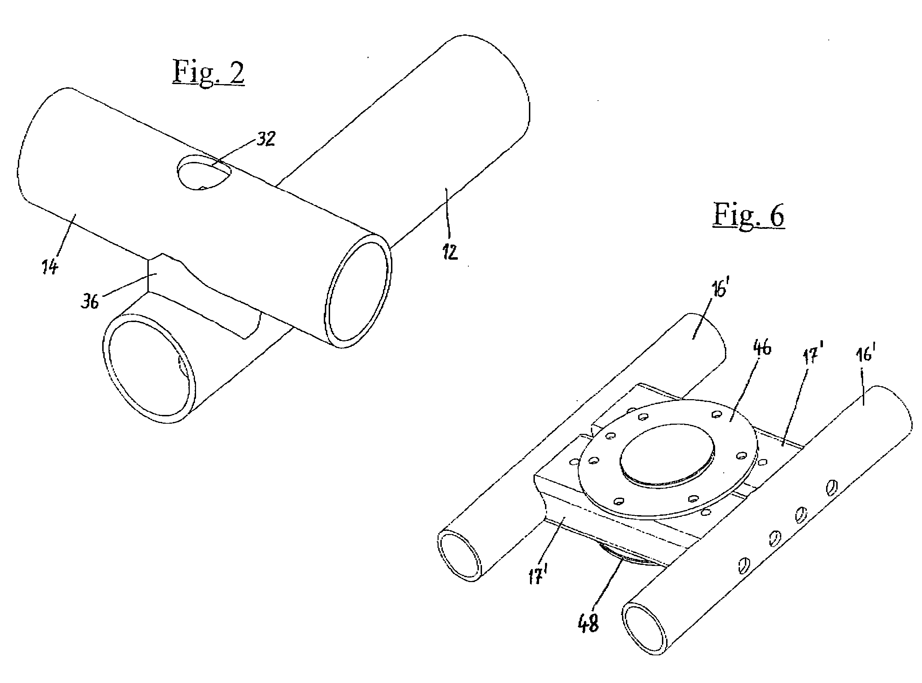

Der in Fig. 1 gezeigte Tragrahmen besteht im Beispielsfall aus zwei parallelen, runden Längsrohren 10, 12, die mit kreuzend darübergelegten, runden Rohren 14, 16 fest verbunden sind. Die Befestigungsanordnung an den Kreuzungsstellen der genannten Rohre wird nachstehend anhand der Fig. 2, 3 und 4 näher erläutert.

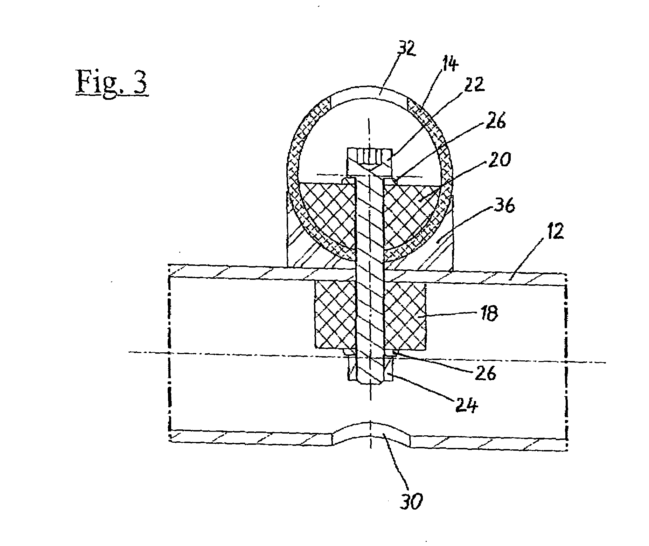

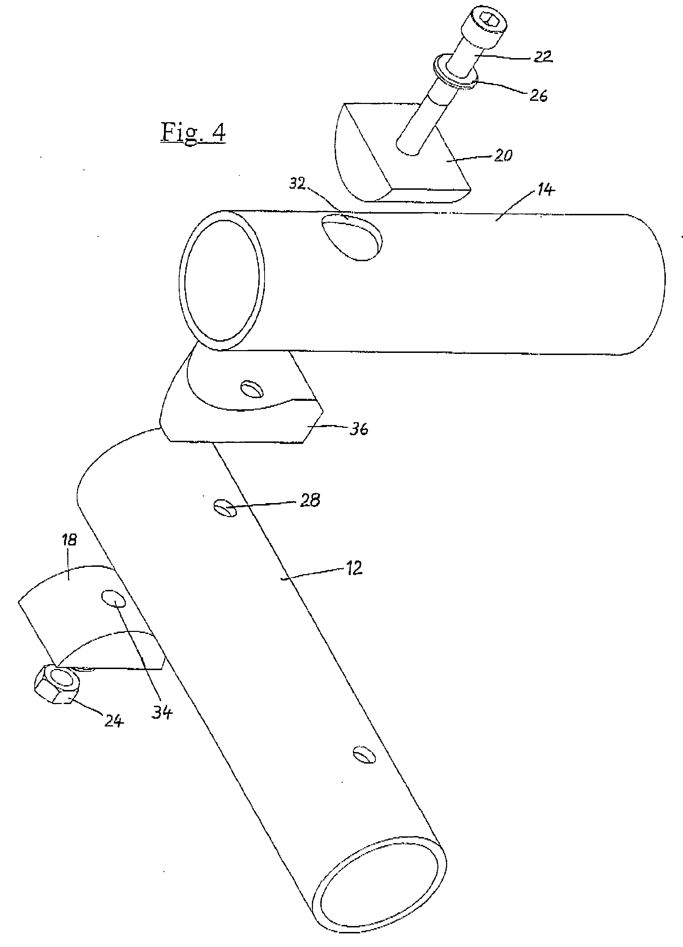

Wie am besten aus Fig. 3 und 4 hervorgeht, ist an jeder Kreuzungsstelle in jedem der beiden daran beteiligten Rohre ein teilzylindrischer Einsatz 18 bzw. 20 angeordnet. Der Radius seiner zylindrischen Mantelfläche paßt jeweils zum Innendurchmesser des Rohrs 12 bzw. 14, in dem der Einsatz 18 bzw. 20 sitzt. Vorzugsweise nimmt der teilzylindrische Einsatz 18 bzw. 20 im Querschnitt nicht ganz die halbe innere Querschnittsfläche des zugeordneten Rohrs ein.

Die Einsätz 18, 20 haben im wesentlichen die Funktion von Unterlegscheiben, wobei sie auf einer Seite der zylindrischen Form der Innenwand des Rohrs 12 bzw. 14 angepaßt sind. Ebenso wie eine Unterlegscheibe haben die Einsätze 18, 20 auch ein Loch zum Hindurchführen einer Schraube 22, welche im Beispielsfall die Rohre 12, 14 an der Kreuzungsstelle verbindet. Dabei bildet der teilzylindrische Einsatz 20 im Rohr 14 eine Unterlage für den Kopf der Schraube 22, während der teilzylindrische Einsatz 18 im Rohr 12 eine Unterlage für eine auf das Ende des Schafts der Schraube 22 aufgeschraubt Mutter 24 darstellt. Zwischen dem Schraubenkopf und dem Einsatz 20 sowie zwischen der Mutter 24 und dem Einsatz 18 kann zusätzlich jeweils noch eine Unterlegscheibe 26 eingesetzt sein. Im montierten Zustand nach Fig. 3 erstreckt sich die Schraube 22 durch zwei in Flucht miteinander ausgerichtete Querbohrungen in den Rohren 12, 14, von denen die Querbohrung in dem Rohr 12 in Fig. 4 gezeigt und mit 28 bezeichnet ist.

Jeweils in Flucht mit der Querbohrung 28, durch die sich im montierten Zustand der Schaft der Schraube 22 erstreckt, ist in den Rohren 12, 14 auf der diametral gegenüberliegenden Seite ein größeres Loch 30 bzw. 32 vorgesehen. Wenn die Rohrdurchmesser im Verhältnis zur Länge der Schraube 22 klein sind, wird die Schraube 22 im Beispielsfall durch das Loch 32 im Rohr 14 eingeführt, durch das Loch im Einsatz 20, die Querbohrungen 28 und das in Fig. 4 mit 34 bezeichnete Loch im Einsatz 18 gesteckt. Über das Loch 30 im Rohr 12 kann die Mutter 24 und die zugehörige Unterlegescheibe 26 auf das Schaftende der Schraube 22 aufgesteckt bzw. aufgeschraubt werden.

Wenn die Schraube 22 in die Mutter 24 eingeschraubt wird, würde sich normalerweise das Rohr 14 nur an zwei Punkten rechts und linkes des Schraubenschafts gegen das Rohr 12 andrücken. Um die Anpreßkraft an jedem Rohr auf eine größere Fläche zu verteilen, ist ein Zwischenstück 36 vorgesehen, das auf seiner mit Bezug auf Fig. 3 oberen Seite eine der äußeren Umfangsfläche des Rohrs 14 angepaßte Mulde und auf seiner Unterseite eine der äußeren Umfangsfläche des Rohrs 12 angepaßte Mulde aufweist. Ebenso wie die Rohre 12, 14 kreuzen sich die beiden rinnenförmigen Mulden. Wie aus Fig. 3 ersichtlich, umfaßt das Zwischenstück 36 das Rohr 14 auf einem fast ebensogroßen Umfangswinkel - annähernd den halben Umfang - wie an der Innenseite der Einsatz 20 anliegt. In gleicher Weise umfaßt das Zwischenstück 36 auch das andere Rohr 12 bis fast zur Hälfte.

Die Einsätze 18 und 20 sowie das Zwischenstück 36 können z. B. aus hartem Kunststoff oder einer Aluminiumlegierung bestehen. Wenn das Gewinde der Schraube 22 nicht in eine Mutter 24, sondern in eine Gewindebohrung im Einsatz 18 eingeschraubt wird, sollte dieser aus Metall, vorzugsweise Stahl bestehen. Unabhängig vom Material der Einsätze 18, 20 wird man diese in das jeweils zugehörige Rohr 12 bzw. 14 einkleben.

Fig. 3 zeigt anschaulich, daß über die Schraube 22 beträchtliche Spannkräfte aufgebracht werden können, weil dabei lediglich alle Teile, durch die sich der Schraubenschaft erstreckt, mit ihren Kontaktflächen aneinander anliegen und zusammengepreßt werden, also nur Druckkräften ausgesetzt sind. Damit sind sie hoch belastbar.

An den Kreuzungsstellen sind die Rohre 12, 14 durch die Querbohrungen 28 und die Löcher 30 bzw. 32 geschwächt. Wenn diese Schwächung im Hinblick auf die zu erwartende Belastung kritisch wird, besteht ohne weiteres die Möglichkeit die Wandstärke der Rohre 12, 14 an den Kreuzungsstellen zu vergrößern, indem an diesen Stellen Rohrabschnitte in die Rohre eingeklebt oder auf die Rohre aufgeklebt werden. Selbstverständlich ist dann bei der Bemessung der Radien der Einsätze 18, 20 und des Zwischenstücks 36 auf die vergrößerte Wandstärke Rücksicht zu nehmen. Die Querbohrungen 28 und Löcher 30, 32 erstrecken sich dann auch durch die ein- oder aufgeklebten Rohrabschnitte, die z. B. ebenso wie die Rohre aus einer Aluminiumlegierung oder aus CFK (carbonfaserverstärkter Kunststoff) bestehen können.

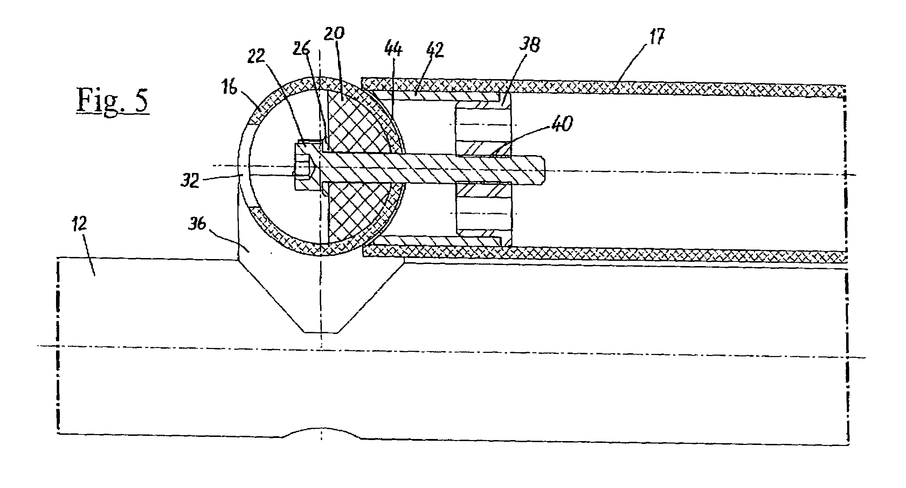

Der in Fig. 1 gezeigte Tragrahmen hat an dem Rohr 16 auch eine Rohrverbindung, bei der ein weiteres rundes Rohr 17 mit seinem Ende T-förmig an das durchgehende Rohr 16 angrenzt. Diese Stoßstelle wird nachstehend anhand der Fig. 5 näher erläutert.

Der Vergleich von Fig. 5 mit Fig. 3 zeigt, daß die Anordnung eines Einsatzes und einer Schraube in dem Rohr 16 genau dieselbe ist wie gemäß Fig. 3 in dem Rohr 14. Deshalb sind in Fig. 5 insoweit dieselben Bezugszeichen für entsprechende Teile benutzt worden. Der Unterschied beginnt erst außerhalb des Rohrs 16.

Bei der Befestigungsanordnung nach Fig. 5 erstreckt sich die durch das Montageloch 32 eingeführte Schraube durch eine der Querbohrung 28 in Fig. 4 entsprechende Querbohrung im Rohr 16 axial in das an das Rohr 16 angrenzende Ende des Rohrs 17 hinein. Als Abstützung des Schafts der Schraube 22 dient in diesem Fall ein in das Rohr 17 eingesetztes Widerlager 38 in Form einer verhältnismäßig starken Scheibe mit einer zentralen, zur Schraube 22 passenden Gewindebohrung 40. Das Widerlager 38 wird zusammen mit einem Rohrstück 42 aus Aluminium oder CFK in das Ende des Rohrs 17 eingeklebt. Die an das Rohr 16 angrenzende Stirnkante des Rohrs 17 wird teilzylindrisch, z. B. durch einen Walzenfräser, ausgekehlt, und zwar nachdem das Rohrstück 42 eingeklebt worden ist. Der Radius der Auskehlung entspricht dem halben Außendurchmesser des Rohrs 16. Dadurch wird erreicht, daß das am Ende durch das Rohrstück 42 verstärkte Rohr 17 entlang des gesamten Umfangs seiner ausgekehlten Stirnkante am äußeren Umfang des Rohrs 16 anliegt und beim Anziehen der Schraube 22 gegen dieses angedrückt wird.

Um eine noch höhere Spannkraft anwenden zu können, kann in die teilzylindrisch ausgekehlte Endöffnung des Rohrs 17 eine aus einem Rohrausschnitt bestehende Schale 44 eingeklebt werden, die in Anpassung an das Material des Rohrs 17 und des Rohrstücks 42 z. B. aus Aluminium oder CFK bestehen kann. Die teilzylindrische Schale 44 endet jeweils an der Stirnkante des Rohrs 17. Es versteht sich, daß im Falle des Einklebens einer Schale 44 in die Öffnung des Rohrs 17 der Radius der Auskehlung entsprechend der Dicke der Schale 44 größer sein muß als bei einer Rohrverbindung ohne eine solche Schale 44. Diese kann gegebenenfalls auch durch einen Rohrabschnitt ersetzt werden, der zur Verstärkung des Rohrs 16 an der Stoßstelle in dieses eingeklebt oder auf es aufgeklebt wird. Das Einkleben der Schale 44 bietet allerdings den Vorteil, daß es einer Aufspreizung der Öffnung des Rohrs 17 beim Anziehen der Schraube 22 entgegen wirkt.

Eine weitere Ausgestaltungsmöglichkeit der Erfindung besteht darin, daß die teilzylindrischen Umfangsflächen der Einsätze 18, 20 und/oder der konkaven Fläche der Schale 44 mit einem dünnen Reibbelag, z. B. aus einem gummiartigen Material, beschichtet wird, um die Reibung an den Rohren 12, 14, 16 zu vergrößern. Gegebenenfalls wird man auch das Zwischenstück 36 auf seinen an den Rohren 12, 14 anliegenden Flächen mit einem derartigen Reibbelag versehen.

Die innenliegenden Befestigungsanordnungen gemäß Fig. 3 und 5 gestatten, insbesondere bei Verwendung von Rohren aus CFK, den Bau sehr leichter, hoch belastbarer Tragrahmen. Sie haben allerdings den Nachteil im Vergleich zu herkömmlichen, mit Vakuumgreifern zu bestückenden Tragrahmen, daß die Verbindungsstellen zwischen den Rohren durch Bohrungen festgelegt sind. Bei Verwendung der üblichen, die Rohre außen umspannenden Klemmstücke ist die Rahmenkonstruktion variabler und kann sich ändernden Gegebenheiten ohne weiteres angepaßt werden. Erfindungsgemäß wird deshalb vorgeschlagen, mit Hilfe besonders leichter Rohre aus CFK und auch der besonders leichten, innenliegenden Befestigungsanordnungen gemäß Fig. 3 und 5 einen Grundrahmen herzustellen, an dessen Rohren dann mittels Klemmstücken oder Klemmblöcken, welche die Rohre außen umgreifen, fallweise weitere Rohre zur Positionierung der benötigten Vakuumgreifer angebracht werden.

Es versteht sich, daß sich das in Fig. 5 gezeigte Verbindungsprinzip auch dann realisieren läßt, wenn das Rohr 17 kein Rundrohr, sondern ein im Querschnitt rechteckiges oder sonstiges Rohr ist. Darin läßt sich in gleicher Weise wie gemäß Fig. 5 in dem Rohr 17 ein Widerlager 38 befestigen. Dies ermöglicht z. B. eine Konstruktion, wie sie in Fig. 6 gezeigt ist. Dort sind zwei nebeneinander angeordnete, gleich lange Rechteckrohre 17', in denen jeweils an beiden Enden gemäß Fig. 5 mittels eines eingeklebten, im Querschnitt rechteckigen Rohrstücks ein Widerlager 38 befestigt ist, mit zwei parallelen Rohren 16' verbunden, wobei im Beispielsfall wegen der verhältnismäßig großen Breite der Rechteckrohre 17' für jede Rohrverbindung zwei Schrauben 22 vorgesehen sind, die sich jeweils durch einen oder zwei nebeneinander angeordnete Einsätze 20 in den Rundrohren 16' erstrecken und in nebeneinander angeordnete Gewindebohrungen der Widerlager 38 in den Rechteckrohren 17' eingeschraubt sind.

Die Rechteckrohre 17', die ebenso wie die Rohre 16' vorzugsweise aus CFK bestehen, bieten eine großflächige Anlage für zwei auf gegenüberliegenden Seiten angebrachte Scheiben 46, 48 aus Aluminium oder Stahl. Die Scheiben 46, 48 können durch Löcher in den Rechteckrohren 17' hindurch fest miteinander verschraubt und z. B. an einer passenden Kupplungsplatte eines Roboterarms angeflanscht werden. Zur Zentrierung ist im Beispielsfall die Scheibe 46 mit einem mittleren Zentrieransatz versehen.

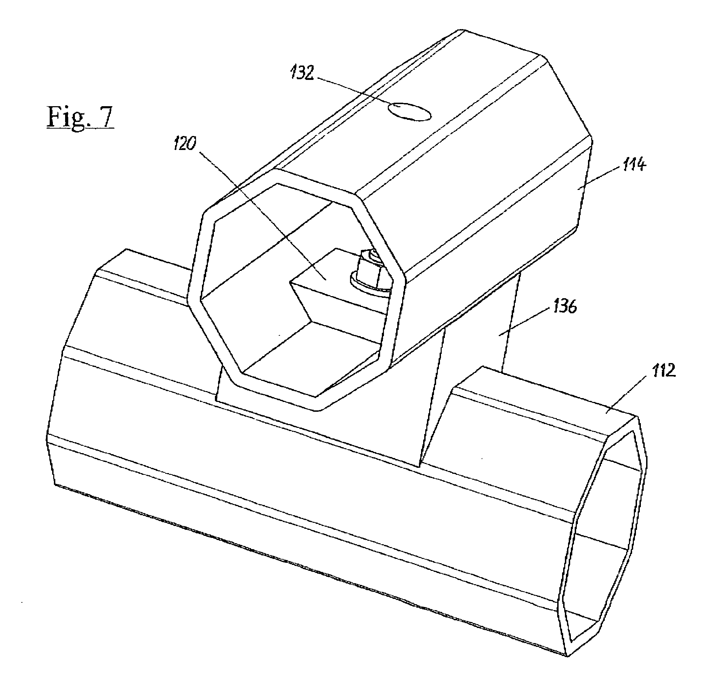

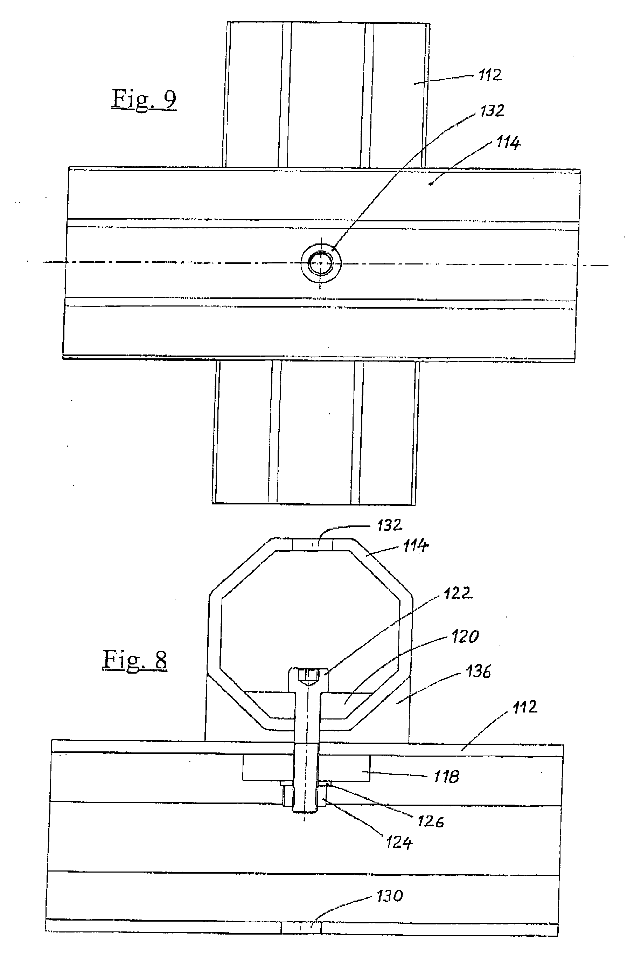

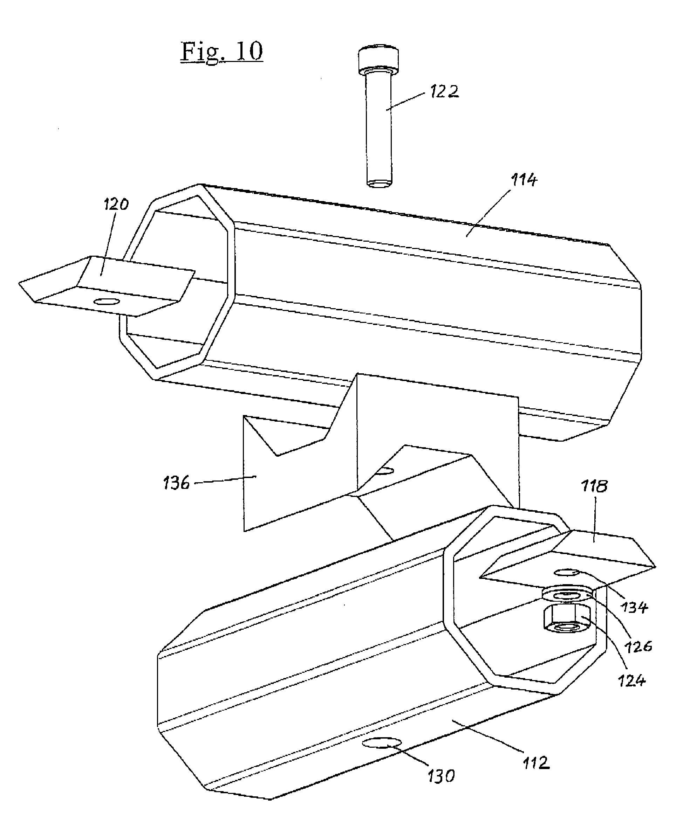

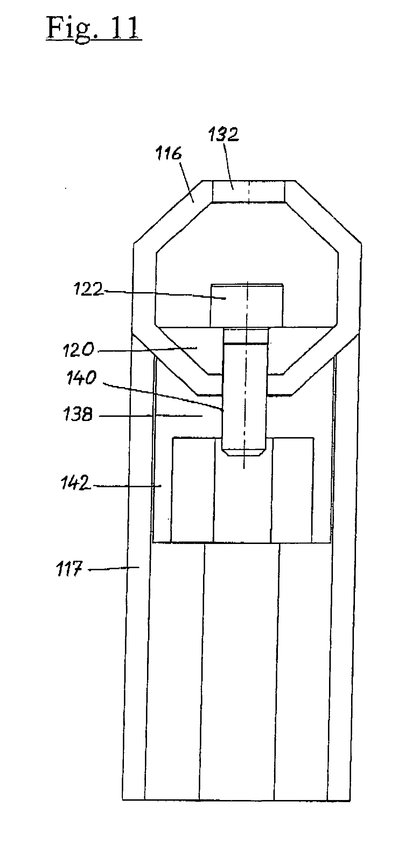

Der in Fig. 1 gezeigte Rahmen könnte auch aus achteckigen Rohren bestehen. Wie dann die Kreuzungsstellen der Rohre aussehen, ist in den Fig. 7 bis 10 dargestellt. Die T-förmige Anschlußstelle ist in Fig. 11 gezeigt. Man erkennt aus den Fig. 7 bis 11, wo die Details, die bestimmten Einzelheiten in den Fig. 1 bis 5 entsprechen, jeweils mit um 100 erhöhten Bezugszahlen versehen sind, daß praktisch alle Einzelheiten sinngemäß und funktional übereinstimmen bzw. übereinstimmen können. Der einzige Unterschied besteht darin, daß die Einsätze und Zwischenstücke sowie bei der T-förmigen Verbindung das Widerlager und die Auskehlung des Rohrendes dem achteckigen Querschnitt der Rohre angepaßt sein müssen. Im übrigen kann auf die vorstehende Beschreibung im Zusammenhang mit den Fig. 1 bis 5 Bezug genommen werden. Die einzige darüber hinausgehende Modifikation geht aus einem Vergleich der Fig. 11 mit Fig. 5 hervor. Bei der Ausführung nach Fig. 11 ist das Widerlager 138 einstückig mit dem Rohrstück 142 ausgebildet und so nahe an das Ende des Rohrs 117 herangerückt, daß es im montierten Zustand an der äußeren Umfangsfläche des Rohrs 116 anliegt, so daß eine der Schale 44 entsprechende Schale entbehrlich ist.

Man erkennt weiterhin aus den Fig. 7 bis 11, daß sich die Bohrungen 128 und Montagelöcher 130, 132 jeweils in einer ebenen Teilfläche der achteckigen Rohrwand befinden. Man könnte zwei sich kreuzende achteckige Rohre zwar auch in Relativstellungen miteinander verbinden, in denen wenigstens eines der beiden Rohre mit einer Ecke zu dem anderen Rohr hin weist, aber dann müßte man die Löcher und Bohrungen auf einer Ecke herstellen, was als Alternative durchaus möglich, aber etwas komplizierter ist.

## Patentansprüche

1. Befestigungsanordnung zur Verbindung von sich kreuzend aneinander vorbeigeführten, runden oder achteckigen Rohren durch wenigstens eine Schraube, insbesondere bei mit Vakuumgreifern bestückten Tragrahmen zum Transport und Halten von Blechteilen in der Automobilindustrie, wobei zwischen den beiden Rohren (12, 14) ein deren äußeren Umfangsflächen angepaßtes Zwischenstück (36) eingespannt ist, **dadurch gekennzeichnet, daß** an der Kreuzungsstelle in jedem der beiden Rohre (12, 14) je ein zu ihrem jeweiligen inneren Querschnitt passender, ihn teilweise ausfüllender Einsatz (18, 20) angeordnet ist, deren einer (20) eine Unterlage für den Kopf der sich durch fluchtende Querbohrungen (28) in den Rohren (12, 14) erstreckenden Schraube (22) und deren anderer (18) eine Abstützung für den Schraubenschaft bildet.

2. Befestigungsanordnung nach Anspruch 1, **dadurch gekennzeichnet, daß** der die Abstützung für den Schraubenschaft bildende Einsatz (18) mit einer zylindrischen Durchgangsbohrung (34) versehen ist und eine Abstützfläche für eine auf dem Schraubenschaft sitzende Mutter (24) aufweist.

3. Befestigungsanordnung nach Anspruch 1, **dadurch gekennzeichnet, daß** der die Abstützung für den Schraubenschaft bildende Einsatz (18) mit einer zur Schraube (22) passenden Gewindebohrung versehen ist.

4. Befestigungsanordnung nach einem der Ansprüche 1 bis 3, **dadurch gekennzeichnet, daß** wenigstens einer der beiden Einsätze (18, 20) in eines der Rohre (12, 14) eingeklebt ist.

5. Befestigungsanordnung nach einem der Ansprüche 1 bis 4, **dadurch gekennzeichnet, daß** die Höhe der Einsätze (18, 20), in Längsrichtung der Schraube (22) gemessen, mindestens 30 %, vorzugsweise mehr als 90 %, des halben inneren Quermaßes des jeweils zugeordneten Rohrs (12, 14) beträgt.

6. Befestigungsanordnung nach einem der Ansprüche 1 bis 5, **dadurch gekennzeichnet, daß** das Zwischenstück (36) die beiden Rohre (12, 14) auf Abstand hält und jeweils über 90 bis 180° am Umfang der Rohre (12, 14) anliegt.

7. Befestigungsanordnung nach einem der Ansprüche 1 bis 6, **dadurch gekennzeichnet, daß** im Bereich der Kreuzungsstelle die Wand wenigstens eines der Rohre (12, 14) durch ein auf- oder eingeklebtes Rohrstück verstärkt ist.

8. Befestigungsanordnung nach einem der Ansprüche 1 bis 7, **dadurch gekennzeichnet, daß** wenigstens eines der Rohre (12, 14) in Flucht mit der Querbohrung (28), durch die sich die Schraube (22) erstreckt, ein im Querschnitt größeres Montageloch (30, 32) aufweist, durch das die Schraube (22) zugänglich ist.

9. Befestigungsanordnung nach einem der vorhergehenden Ansprüche, **dadurch gekennzeichnet, daß** der Einsatz (18, 20) in wenigstens einem der Rohre (12, 14, 16) aus einer Aluminiumlegierung oder festem Kunststoff besteht.

10. Befestigungsanordnung nach einem der vorhergehenden Ansprüche, **dadurch gekennzeichnet, daß** die Rohre (10 - 16) aus CFK bestehen.

11. Rohrrahmen, bestehend aus mindestens zwei durchgehenden Rohren (10, 12) und mindestens zwei an diesen kreuzend vorbeigeführten Rohren (14, 16), **dadurch gekennzeichnet, daß** die runden oder achteckigen Rohre an den Kreuzungsstellen durch eine Befestigungsanordnung nach Anspruch 1 verbunden sind.

12. Rohrrahmen nach Anspruch 11, **dadurch gekennzeichnet, daß** er zusätzlich mindestens eine Befestigungsanordnung zur Verbindung eines der sich kreuzenden Rohre (16) mit dem Ende eines T-förmig angrenzenden Rohrs (17) aufweist, wobei in dem ersten Rohr (16) ein zu seinem inneren Querschnitt passender, ihn teilweise ausfüllender Einsatz (20) angeordnet ist, der eine Unterlage für den Kopf einer sich durch eine Querbohrung (28) in dem ersten Rohr erstreckenden Schraube (22) bildet, deren Schaft in ein in dem an der Stoßstelle endenden, zweiten Rohr (17) festgelegtes Widerlager (38) einschraubbar ist, und das angrenzende Ende des zweiten Rohrs (17) in Anpassung an die Umfangsfläche des ersten Rohrs (16) ausgekehlt ist.

13. Rohrrahmen nach Anspruch 12, **dadurch gekennzeichnet, daß** das Widerlager (38) aus einer mit einer zur Schraube (22) passenden, axialen Gewindebohrung versehenen Scheibe, vorzugsweise aus Stahl, besteht, die hinter einem in den Endbereich des zweiten Rohrs (17) eingeklebten Rohrstück (42) eingesetzt oder einstückig mit dem Rohrstück ausgebildet ist.

14. Rohrrahmen nach Anspruch 12 oder 13, **dadurch gekennzeichnet, daß** das erste Rohr (16) in Flucht mit der Querbohrung (28) ein im Querschnitt größeres Montageloch (32) aufweist, durch das die Schraube (22) einführbar und zugänglich ist.

15. Rohrrahmen nach einem der Ansprüche 12 bis 14, **dadurch gekennzeichnet, daß** zwischen der Umfangsfläche des ersten Rohrs (16) und dem passend ausgekehlten Ende des zweiten Rohrs (17) eine mit diesem verklebte, aus einem Rohrwandausschnitt bestehende Schale (44) eingespannt ist.

16. Rohrrahmen nach einem der Ansprüche 12 bis 15, **dadurch gekennzeichnet, daß** zwei mit ihren Enden T-förmig an durchgehende runde oder achteckige Rohre (16') angrenzende, im Querschnitt rechteckige Rohre (17') nebeneinander angeordnet und zwischen zwei durch Schrauben verbundenen Scheiben oder Platten (46, 48) mit Montagebohrungen und/oder Befestigungselementen zum Anschluß an ein den Rohrrahmen (16', 17') tragendes Bauteil eingespannt sind.

17. Rohrrahmen nach einem der Ansprüche 11 bis 16, **dadurch gekennzeichnet, daß** er weitere rohrförmige Rahmenteile trägt, die durch die Rohre außen umspannende Klemmstücke mit den durch Befestigungsanordnungen nach Anspruch 1 oder Anspruch 12 verbundenen Rohren verspannt sind.

## Claims

1. A fastening arrangement for connecting round or octagonal tubes, which are conducted past each other in an intersecting manner, by means of at least one screw, in particular in connection with support frames equipped with vacuum grippers for transporting and holding sheet metal parts in the automobile industry, wherein an intermediate element (36) matched to the outer circumferential surfaces of the two tubes (12, 14) is clamped between the two tubes, **characterized in that** at the joint an insert (18, 20) is arranged in each one of the two tubes (12, 14), which matches their respective inner cross section and partially fills it, one of the inserts (20) constitutes an underlay for the head of the screw (22) extending through aligned transverse bores (28) in the tubes (12, 14), and whose other insert (18) forms a support for the screw shank.

2. The fastening arrangement in accordance with claim 1, **characterized in that** the insert (18) constituting the support for the screw shank is provided with a cylindrical through-bore (34) and has a support surface for a nut (24) seated on the screw shank.

3. The fastening arrangement in accordance with claim 1, **characterized in that** the insert (18) constituting the support for the screw shank is provided with a threaded bore matching the screw (22).

4. The fastening arrangement in accordance with one of claims 1 to 3, **characterized in that** at least one of the two inserts (18, 20) is glued into one of the tubes (12, 14).

5. The fastening arrangement in accordance with one of claims 1 to 4, **characterized in that** the height of the inserts (18, 20), measured in the longitudinal direction of the screw (22) is at least 30%, preferably more than 90%, of half the interior transverse dimension of the respectively assigned tube (12, 14).

6. The fastening arrangement in accordance with one of claims 1 to 5, **characterized in that** the intermediate element (36) maintains the two tubes (12, 14) spaced apart and rests respectively over 90 to 180° against the circumference of the tubes (12, 14).

7. The fastening arrangement in accordance with one of claims 1 to 6, **characterized in that** the wall of at least one of the tubes (12, 14) is reinforced by a glued-on or glued-in tube element in the area of the intersection.

8. The fastening arrangement in accordance with one of claims 1 to 7, **characterized in that,** aligned with the transverse bore (28) through which the screw (22) extends, at least one of the tubes (12, 14) has an assembly hole (30, 32), which has a larger cross section, through which the screw (22) is accessible.

9. The fastening arrangement in accordance with one of the preceding claims, **characterized in that** the insert (18, 20) in at least one of the tubes (12, 14, 16) consists of an aluminum alloy or a strong plastic material.

10. The fastening arrangement in accordance with one of the preceding claims, **characterized in that** the tubes (10 to 16) are made of CFR plastic material.

11. A tubular frame, consisting of at least two continuous tubes (10, 12) and at least two tubes (14, 16) conducted past the former ones in an intersecting manner, **characterized in that** the round or octagonal tubes are connected at the intersections by means of a fastening arrangement in accordance with claim 1.

12. The tubular frame in accordance with claim 11, **characterized in that** it comprises in addition at least one fastening arrangement for connecting one of the tubes (16) conducted past each other in an intersecting manner to the end of a tube (17) adjoining in a T-shape, wherein an insert (20) is arranged in the first tube (16), which matches its interior cross section and partially fills it and forms an underlay for the head of the screw (22) extending through a transverse bore (28) in the first tube, whose shank can be screwed into a counterpiece (38) fixed in place in the second tube (17) terminating at the joint, and wherein the adjoining end of the second tube (17) is chamfered out to match the circumferential surface of the first tube (16).

13. The tubular frame in accordance with claim 12, **characterized in that** the counterpiece (38) consists of a disk having an axial threaded bore matching the screw (22), preferably made of steel, which is inserted behind a tube element (42) glued into the end area of the second tube (17), or is formed as one piece with the tube element.

14. The tubular frame in accordance with claim 12 or 13, **characterized in that,** aligned with the transverse bore (28), the first tube (16) has an assembly hole (32), which has a larger cross section, through which the screw (22) can be inserted and is accessible.

15. The tubular frame in accordance with one of claims 12 to 14, **characterized in that** a shell (44), consisting of a tube section, is clamped between the circumferential surface of the first tube (16) and the matching chamfered-out end of the second tube (17).

16. The tubular frame in accordance with one of claims 12 to 15, **characterized in that** two tubes (17'), which are rectangular in cross section and with their ends adjoin continuous round or octagonal tubes (16') in a T-shape, are arranged side-by-side and are clamped between two disks or plates (46, 48), which are connected with each other by screws and have assembly bores and/or fastening elements for being connected to a component supporting the tubular frame (16', 17').

17. The tubular frame in accordance with one of claims 11 to 16, **characterized in that** it supports further tube-shaped frame elements, which are clamped to the tubes being connected by the fastening arrangements in accordance with claim 1 or claim 12 by means of clamping elements enclosing the exterior of the tubes.

## Revendications

1. Dispositif de fixation pour relier des tubes ronds ou octogonaux qui passent les uns sur les autres et se croisent à l'aide d'au moins une vis, notamment pour des châssis de support garnis d'organes de préhension à ventouse pour transporter et tenir des pièces en tôle dans l'industrie automobile et une pièce intermédiaire (36) est serrée entre les deux tubes (12, 14) adaptés à leur surface périphérique extérieure,
**caractérisé en ce qu'**
à l'emplacement de l'intersection, dans chacun des deux tubes (12, 14) on a un insert (18, 20) adapté à leur section interne respective pour la remplir partiellement, l'un des inserts (20) formant un appui pour la tête de la vis (22) traversant des perçages transversaux alignés (28) des tubes (12, 14) et dont l'autre insert (18) forme un appui pour le corps de vis.

2. Dispositif de fixation selon la revendication 1,
**caractérisé en ce que**
l'insert (18) qui forme l'appui pour le corps de vis comporte un perçage traversant (34) cylindrique et présente une surface d'appui pour un écrou (24) porté par le corps de vis.

3. Dispositif de fixation selon la revendication 1,
**caractérisé en ce que**
l'insert (18) formant l'appui pour le corps de vis est muni d'un taraudage adapté à la vis (22).

4. Dispositif de fixation selon l'une des revendications 1 à 3,
**caractérisé en ce qu'**
au moins l'un des deux inserts (18, 20) est collé dans l'un des tubes (12, 14).

5. Dispositif de fixation selon l'une des revendications 1 à 4,
**caractérisé en ce que**
la hauteur des inserts (18, 20) mesurés dans la direction longitudinale de la vis (22) correspond au moins à 30 % et de préférence à plus de 90 % de la demi-section intérieure transversale du tube correspondant (12, 14).

6. Dispositif de fixation selon l'une des revendications 1 à 5,
**caractérisé en ce que**
la pièce intermédiaire (36) maintient à distance les deux tubes (12, 14) et s'appuie respectivement sur plus de 90° jusqu'à 180° à la périphérie des tubes (12, 14).

7. Dispositif de fixation selon l'une des revendications 1 à 6,
**caractérisé en ce que**
dans la région du point d'intersection, la paroi d'au moins l'un des tubes (12, 14) est renforcée par un élément tubulaire collé à l'extérieur ou à l'intérieur.

8. Dispositif de fixation selon l'une des revendications 1 à 7,
**caractérisé en ce qu'**
au moins l'un des tubes (12, 14) comporte un orifice de montage (30, 32) de section plus grande dans l'alignement du perçage transversal (28) dans lequel passe la vis (22), cet orifice de montage permettant l'accès à la vis (22).

9. Dispositif de fixation selon l'une des revendications précédentes,
**caractérisé en ce que**
l'insert (18, 20) dans au moins l'un des tubes (12, 14, 16) est en un alliage d'aluminium ou en matière plastique dure.

10. Dispositif de fixation selon l'une des revendications précédentes,
**caractérisé en ce que**
les tubes (10-16) sont en matière plastique renforcée par des fibres CFK.

11. Châssis tubulaire formé d'au moins deux tubes continus (10, 12) et d'au moins deux tubes (14, 16) qui les croisent,
**caractérisé en ce que**
les tubes de section ronde ou octogonale sont reliés aux points d'intersection par un dispositif de fixation selon la revendication 1.

12. Châssis tubulaire selon la revendication 11,
**caractérisé en ce qu'**
il comporte en plus au moins un dispositif de fixation pour relier l'un des tubes (16) qui se croisent à l'extrémité d'un tube adjacent (17) en forme de T,
et dans le premier tube (16) on a un insert (20) adapté à sa section intérieure et qui le remplit au moins partiellement, cet insert formant un appui pour la tête d'une vis (20) traversant un perçage transversal (28) du premier tube et dont la tige se visse dans un appui (38) fixé dans le second tube (17) se terminant au point de jonction, et l'extrémité adjacente du second tube (17) est creusée pour s'adapter à la surface périphérique du premier tube (16).

13. Châssis tubulaire selon la revendication 12,
**caractérisé en ce que**
l'appui (38) est formé d'une rondelle de préférence en acier, munie d'un taraudage axial adapté à la vis (22), placée derrière un élément tubulaire (42) collé dans la zone d'extrémité du second tube (17) ou faisant corps avec l'élément tubulaire.

14. Châssis tubulaire selon les revendications 12 ou 13,
**caractérisé en ce que**
le premier tube (16) dans l'alignement avec le perçage transversal (28), comporte un trou de montage (32) de section plus grande à travers lequel on introduit la vis (22) et on accède à celle-ci.

15. Châssis tubulaire selon l'une des revendications 12 à 14,
**caractérisé en ce qu'**
entre la surface périphérique du premier tube (16) et l'extrémité creusée adaptée du second tube (17), on a serré une coquille (44) collée au tube et composée d'une découpe de la paroi tubulaire.

16. Châssis tubulaire selon l'une des revendications 12 à 15,
**caractérisé en ce que**
deux tubes (17') de section rectangulaire juxtaposés, sont appliqués suivant une disposition en T par leurs extrémités contre des tubes (16'), ronds ou octogonaux, adjacents, et ils sont serrés entre deux ronds ou plaques (46, 48) reliés par des vis, ayant des perçages de montage et/ou des éléments de fixation pour le raccordement à un composant portant le châssis tubulaire (16', 17').

17. Châssis tubulaire selon l'une des revendications 11 à 16,
**caractérisé en ce qu'**
il porte d'autres parties de châssis tubulaire serrées par des pièces de serrage entourant extérieurement les tubes avec les tubes reliés par des dispositifs de fixation selon les revendications 1 ou 12.
